Europäisches Patentamt

European Patent Office

Office européen des brevets

(11) Numéro de publication: **0 073 688**
**B1**

# FASCICULE DE BREVET EUROPÉEN

(45) Date de publication du fascicule du brevet:
05.11.86

(21) Numéro de dépôt: **82401298.3**

(22) Date de dépôt: **09.07.82**

(51) Int. Cl.⁴: **F 16 L 59/00,** B 64 G 1/58

(54) **Ecran de protection ou de dissipation thermique.**

(30) Priorité: **26.08.81 FR 8116303**

(43) Date de publication de la demande:
**09.03.83 Bulletin 83/10**

(45) Mention de la délivrance du brevet:
**05.11.86 Bulletin 86/45**

(84) Etats contractants désignés:
**DE GB SE**

(56) Documents cité:
**FR-A-2 061 509**
**US-A-2 997 955**
**US-A-3 014 353**
**US-A-3 397 168**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Le Touche, Roger André Louis, 5, rue du Beauregard, F-78920 Ecquevilly (FR)**

(74) Mandataire: **Rinuy, Santarelli, 14, avenue de la Grande Armée, F-75017 Paris (FR)**

LIBER, STOCKHOLM 1986

## Description

La présente invention concerne un écran de protection ou de dissipation thermique et en particulier un écran destiné à la protection d'organes qui doivent résister pendant une durée relativement longue à des flux thermiques d'intensité quelconque pouvant atteindre un degré extrêmement élevé (cas d'un incendie ou d'un phénomène thermique très important pouvant conduire à des températures dépassant 2000°C).

On rencontre ce type de phénomène lorsque, par exemple, le feu est la cause de la destruction d'un avion. Or pour être épargnées, les boîtes d'enregistrement de données de vol doivent être efficacement protégées. Il est, en effet important de pouvoir, après le sinistre, récupérer ces boites de manière à en connaître ainsi son origine.

De même, dans bien d'autres cas, il peut être également utile de protéger, pendant une durée relativement importante, un organe quelconque d'un flux thermique intense. Cela peut se présenter, par exemple, pour les cônes d'équipement de véhicules spatiaux dans la phase de rentrée dans l'atmosphère ou encore pour les portes ou autres cloisons pare-feu placées à proximité d'une source thermique qui peut devenir spontanément intense.

Or on connaît divers moyens de protection vis-àvis d'un flux thermique élevé. Parmi ceux-ci, on citera ceux dont l'efficacité ne dépend que de la propriété isolante intrinsèque des matériaux qui les composent. Toutefois, dans certaines applications, les quantités, les volumes ou les épaisseurs qu'il faut prévoir sont tellement élevés ou prohibitifs que l'on hésite à y faire appel. Mais lors bien même que ces facteurs ne feraient pas reculer étant donné la nécessité dictée par les circonstances, il s'avère très souvent que ces moyens restent malgré tout inopérants, dans certains cas, pour maintenir une température constante suffisamment basse de l'organe à protéger pendant une durée suffisamment longue.

Or, pour obtenir ce dernier résultat, à savoir, maintenir l'organe à protéger, par exemple, à une température maximum de 100°C alors que la température ambiante peut atteindre ou dépasser 1100°C ou 2000°C, on a déjà proposé un écran de dissipation thermique dont l'avantage supplémentaire est de réduire au moins de moitié l'épaisseur de l'écran protecteur en prenant pour référence un écran constitué d'un matériau isolant classique. Cet écran qui fait l'objet du brevet français n° 6905203 du 27 février 1969 publié sous le n° 2061509 est essentiellement caractérisé par le fait qu'il comprend, entre la paroi chaude et la paroi froide un élément hydrateur stratifié au contact de la paroi froide, un élément surchauffeur stratifié entre l'élément hydrateur et la paroi chaude, un élément réfractaire poreux stratifié entre l'élément surchauffeur et la paroi chaude, ladite paroi chaude étant percée d'orifices permettant à la vapeur saturée développée dans l'hydrateur pendant la mise en service de l'écran et surchauffée pendant son passage à travers le surchauffeur de s'échapper vers l'extérieur de la paroi chaude.

On sait, en effet, que dans le processus complet de vaporisation avec surchauffe, tel qu'il résulte du diagramme de Mollier (bien connu de l'homme de l'art), la surchauffe de la vapeur produit, pour une température de protection définie, une augmentation d'enthalpie qui est donnée par la différence des ordonnées entre l'intersection des courbes isobares, avec la courbe de saturation, et leur intersection avec les courbes isothermes.

Or, avec un écran tel que rappelé ci-dessus, on peut réaliser une protection thermique efficace dans laquelle la température la plus basse ne dépasse pas la température de vaporisation du liquide inclus dans l'hydrateur et ce pendant toute la durée de cette vaporisation soit, par exemple, 100°C pour de l'eau à la pression atmosphérique normale de 1 bar et pendant une durée directement proportionnelle à la quantité de cette eau incluse dans ledit hydrateur.

On se rend alors immédiatement compte que bien que présentant des avantages certains par rapport aux écrans antérieurs et bien que, pour un certain degré de protection désiré, l'épaisseur de l'écran faisant l'objet du brevet cité ci-dessus soit nettement réduite, il n'en reste pas moins qu'il présente un certain encombrement volumique dont on ne dispose pas toujours, notamment lorsqu'il s'agit de protéger des organes ou éléments qui eux-mêmes sont nécessairement et impérativement confinés dans un volume réduit ne pouvant obligatoirement pas admettre ou tolérer un encombrement extérieur ou périphérique sensible supplémentaire. Toutefois, leur protection étant indispensable et l'écran du brevet antérieur ne pouvant convenir pour des raisons dimensionnelles, d'une part, et pour des raisons de rigidité relative de structure, d'autre part, un écran d'encombrement minimum, d'une part, et souple, d'autre part, s'impose alors à l'homme de l'art.

Par ailleurs, ledit écran du brevet antérieur pose un problème lorsque la température à laquelle est soumis normalement l'élément ou l'organe à protéger est supérieure à la température de vaporisation du liquide inclus dans l'hydrateur (supérieure à 100°C dans le cas de l'eau). En effet, à cette température normale d'utilisation, la quantité de liquide incluse dans cet hydrateur s'épuise et ne peut normalement pas être récupérée à moins de disposer, comme prévu dans ledit brevet, d'un moyen de recyclage dans l'hydrateur de la vapeur surchauffée après sa condensation. Or ce moyen constitue une solution ne donnant pas nécessairement satisfaction dans tous les cas. Aussi, le risque serait grand de se trouver, en cas d'incendie, sans la quantité suffisante de liquide de l'hydrateur dont le rôle et la fonction sont primordiaux au niveau de l'efficacité de la protection. Pouvoir alors disposer d'un hydrateur en bon état de charge en liquide à n'importe quelle température s'impose donc aussi à l'homme de l'art.

Enfin, les éléments réfractaires entrant dans la constitution de l'écran du brevet ont une mauvaise réponse aux très hautes températures (égales ou supérieures à 2000°C) se traduisant par leur détérioration. Une solution à cet égard s'impose donc aussi.

Or la présente invention résout ces trois problèmes et couvre donc un écran de dissipation thermique du type qui vient d'être rappelé en référence au brevet français N° 69.05203 (FR-A-2 061 509), c'est-à-dire du type comprenant une face dite "face froide" destinée à venir au contact de la paroi à protéger contre l'agression thermique; une face dite "face chaude" appelée à être exposée à ladite agression thermique et, entre ces deux faces des moyens appelés à jouer le rôle d'hydrateur et de surchauffeur, cet écran se caractérisant par le fait qu'il comprend comme face froide une couche d'un matériau polymère souple armé ou non d'un matériau fibreux et, comme moyen jouant le rôle d'hydrateur et de surchauffeur un matériau souple du type nappe, mat, réseau de fibres réfractaires servant de support ou d'armature à un matériau inorganique pulvérulent susceptible d'absorber et de retenir un liquide pour donner une pâte ou un gel à haut rendement thixotrope, ce liquide ayant une température de vaporisation à la pression du milieu ambiant égale à celle correspondant à la température de protection désirée de l'élément à protéger; comme face chaude, une couche d'un matériau élastomère souple armé ou non de matériau fibreux directement appliqué sur ledit moyen hydrateur surchauffeur, ce matériau élastomère devenant poreux aux températures supérieures à ladite température de vaporisation dudit liquide, cette face externe soumise à l'agression thermique constituant un moyen permettant, au cours de cette agression, audit liquide de se vaporiser à la pression du milieu ambiant.

Comme exemples de matériaux entrant dans la réalisation de l'écran selon l'invention, on citera:

- la silice colloïdale pour le matériau pulvérulent destiné à absorber et retenir un liquide pour donner une pâte ou un gel à haut rendement thixotrope;

- les fibres, les toiles, les tissus de fibres réfractaires telles que de roche, de céramique et analogues pour le matériau souple du type nappe, mat, réseau de fibres;

- tous élastomères et en particulier les élastomères de silicones armés ou non de fibres, de toiles ou de tissus réfractaires et analogues, pour les éléments souples de revêtement.

Suivant un mode de réalisation possible la face externe renferme une charge capable de donner une réaction endothermique avec le liquide vaporisé et surchauffé provenant dudit moyen hydrateur-surchauffeur au cours du déroulement de l'agression thermique.

De façon avantageuse, le matériau donnant avec le liquide vaporisé et surchauffé provenant de l'hydrateur-surchauffeur, une réaction endothermique est le carbone.

On sait en effet que le carbone donne avec l'eau à haute température, la réaction bien connue dite de fabrication du gaz à l'eau fortement endothermique. On verra ci-après l'importance et l'intérêt que présente une telle réaction endothermique pour la protection contre l'agression par des flux thermiques extrêmement élevés.

Suivant encore un autre mode de réalisation possible, on fournit au cours de l'agression thermique du liquide à l'élément hydrateur-surchauffeur.

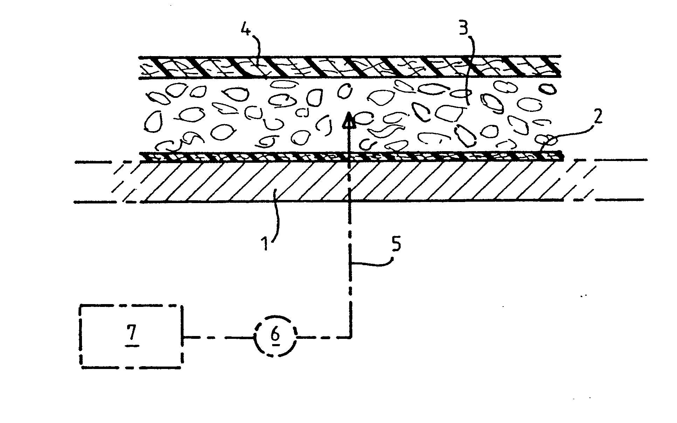

D'autres caractéristiques et les avantages de l'invention ressortiront plus clairement de la description qui va suivre faite en regard du dessin annexé qui est un schéma illustrant un écran selon l'invention monté sur la paroi d'un élément à protéger.

En se référant à ce dessin, on a représenté, en coupe et schématiquement, l'élément à protéger 1 sur lequel est appliquée par tout moyen connu en soi, tel que, par collage, enduction ou autre, une couche de revêtement 2; cette couche de revêtement sert elle-même de support à l'hydrateur-surchauffeur proprement dit 3 avantageusement constitué d'une armature fibreuse souple imprégnée d'une pâte ou d'un gel à base d'une substance à haut rendement thixotrope et d'un liquide dont la température de vaporisation est fonction de la température à laquelle on désire que l'élément à protéger soit maintenu, ou d'une armature fibreuse souple au sein de laquelle est le plus uniformément répartie à l'état pulvérulent ladite substance appelée à donner, avec ledit liquide de température de vaporisation donnée, ledit gel à haut rendement thixotrope.

L'hydrateur-surchauffeur 3 est lui-même revêtu d'une couche de revêtement 4 de structure ou de constitution pouvant être identiques ou différentes de celles de la couche 2.

Les couches 2 et 4 sont avantageusement constituées d'un élastomère du type, par exemple, élastomère de silicone, armé ou non de fibres réfractaires sous forme de mats, de feutres ou de tissus, d'un réfractaire, de quartz ou similaire. Ces couches sont appliquées par collage ou autrement par tout moyen approprié, respectivement sur les éléments 1 et 3 sous-jacents leur servant de supports.

Etant donné la nature et la souplesse des éléments constitutifs de l'écran selon l'invention ainsi réalisé, il est possible de lui faire épouser exactement les contours de l'élément à protéger avec le minimum d'encombrement, une efficacité de protection notable étant obtenue avec le minimum d'épaisseur comme cela ressortira des exemples qui seront donnés ci-après.

Le phénomène auquel on assiste avec l'écran de l'invention est le suivant, en prenant le cas où l'élément hydrateur-surchauffeur 3 est à base d'un gel aqueux de silice colloïdale:

Lorsque la face externe de l'élément 4 est soumise à l'agression d'un flux thermique intense (température pouvant atteindre 1100°C), et que l'ensemble est à la pression de 1 bar, ce flux thermique atteignant l'élément hydrateur-surchauffeur 3, déclenche, d'une part, à la pression considérée, la vaporisation du liquide contenu au sein de cet élément (c'est-à-dire de l'eau dans le cas de l'exemple choisi) et, d'autre part, la surchauffe de la vapeur ainsi produite qui évacue alors le maximum de calories à travers l'élément 4 devenu poreux sous l'effet de ladite agression thermique.

Ainsi, dans ce processus complet de vaporisation avec surchauffe, la surchauffe de la vapeur produit une augmentation d'enthalpie qui est donnée par la différence entre la température stabilisée de la vapeur au niveau de la paroi froide et la température maximale de ladite vapeur à sa sortie de la protection thermique. De ce fait, on comprendra aisément que plus le flux d'agression thermique est important plus la quantité de calories évacuées par la matière active sera importante. De plus, on réalise une protection thermique efficace dans laquelle la température la plus basse ne dépasse pas la température de vaporisation du liquide inclus dans l'hydrateur-surchauffeur et ce pendant toute la durée de cette vaporisation soit, par exemple, 100°C pour l'eau à la pression atmosphérique de 1 bar et pendant une durée directement proportionnelle à la quantité de cette eau incluse dans ledit hydrateur-surchauffeur quelle que soit l'agression thermique.

On se rend immédiatement compte que l'on peut définir la température de protection la plus basse par celle de vaporisation du liquide inclus dans l'hydrateur et/ou par la pression à laquelle est soumis ledit hydrateur.

Ainsi, en prenant toujours l'eau comme liquide inclus dans l'hydrateur, on sait par exemple que cette eau se vaporise à environ 17°C sous 0,02 bar, et que de ce fait, la température de protection que l'on pourrait obtenir se situerait entre 17°C et 100°C et au cours d'une variation de pression entre 0,02 et 1 bar, alors que l'agression du flux thermique serait toujours de l'ordre de 1100°C et plus.

L'intérêt de l'invention apparaît alors nettement à l'homme de l'art, en particulier dans le domaine aérospatial (entrée dans l'atmosphère d'un engin spatial avec variation de la pression de 0,02 à 1 bar).

Outre la nature des liquides inclus dans l'hydrateur qui permet de définir ainsi différentes gammes de température de protection, la quantité de ce liquide définit la durée de protection.

Toutefois, étant donné la constitution même de l'hydrateur, il est possible de prévoir la recharge en liquide de ce dernier, la substance qui le compose en étant fortement avide et formant avec lui un gel à haut rendement thixotrope.

C'est ainsi que l'écran selon l'invention peut comporter au départ, soit un gel composant de l'hydrateur-surchauffeur déjà constitué et (en se référant à la partie de la figure en traits mixtes), un conduit d'alimentation en liquide 5, provenant d'une source 7, avec pompe de circulation 6 commandée automatiquement en fonction de la quantité de liquide épuisé et/ou de la température, soit la substance appelée à donner ledit gel au moment de l'utilisation, cette substance se trouvant répartie à l'état pulvérulent sur son support (silice pulvérulente par exemple) et le même circuit d'alimentation en liquide. Une telle réalisation permet de pallier et compenser à tout moment les pertes en liquide qui peuvent se produire lors d'une agression thermique qui serait de moindre importance mais conduisant tout de même à la vaporisation du liquide inclus dans l'hydrateur-surchauffeur.

Par ailleurs, la dissipation des calories peut encore être augmentée en choisissant, pour l'élément de revêtement 4, un matériau élastomère devenant nécessairement poreux aux températures élevées et, de plus, susceptible de s'expanser, ce qui facilite cette dissipation.

De façon avantageuse et suivant une variante, l'élément d'étanchéité 4 peut comporter dans sa formulation et sa réalisation une substance ou formulation à base de carbone qui, dans le cas particulier de la vapeur d'eau, donne une réaction fortement endothermique (réaction du gaz à l'eau) entraînant de ce fait les calories à éliminer.

Les exemples suivants sont donnés à titre illustratif, nullement limitatif des résultats que l'on peut obtenir avec un écran réalisé selon l'invention.

Ces résultats ont été donnés par des essais consistant à soumettre une éprouvette comportant la protection thermique selon l'invention à un flux thermique simulant un incendie par hydrocarbure en plaçant ces éprouvettes à 1 mètre au-dessus du lit de flamme (environ 900°C), et en disposant des thermocouples uniformément répartis entre la peau externe et la protection de manière à pouvoir noter, en cours d'essai, les températures en différents points de l'éprouvette.

**Exemple 1**

**Protection des réservoirs**

**Essai d'un container d'un diamètre de 650 mm:**

**Définition de l'éprouvette:**

Support: Capacité bobinée en verre-résine époxyde de 650 mm de diamètre et d'environ 1 mètre de long

Protection: épaisseur 25 mm - masse totale de la protection thermique: 101 kg

Sept thermocouples sont placés et uniformément répartis entre la peau externe de la capacité et la protection thermique.

### Résultat de l'essai

- Stabilisation des 7 points de mesure de température du container à 100°C ± 10°C après 2 heures d'exposition
- Palier de 4 heures à 100°C ± 10°C
- Le point le plus chaud atteint 110°C après 6 heures d'exposition au flux thermique. Il a fallu, pour cela, utiliser 1400 litres de combustible.

Il est à noter que, dans ces conditions d'essai et à épaisseur égale, les meilleurs matériaux connus actuellement assurent une protection de l'ordre de 1 heure, ce qui serait le cas, à épaisseur égale, avec un écran réalisé suivant le brevet français anterieur N° 2 061 509.

### Exemple 2

### Protection mécanique des matériaux de construction:

#### Essai de deux passerelles de sécurité incendie de plateforme off-shore
#### Matériel utilisé

Le matériel d'essai utilisé est identique à celui des essais de containers.

Cependant, les passerelles, placées à 1 mètre au-dessus du lit de flamme (distance entre appuis 1 mètre), sont de plus soumises à une force de 500 daN (simulant le passage d'un sauveteur chargé d'un sinistré) appliquée au centre de chaque passerelle sur une surface de 300 x 300 mm.

### Définition des éprouvettes

Support: Caillebotis en alliage léger
(Type I: sans perforations)
(Type II: avec perforations)
Dimensions: 1080 x 300 mm épaisseur 25 mm
Protection: Remplissage des alvéoles des caillebotis au moyen de l'invention (pas de protection sur la surface supérieure des passerelles)
Masse des éprouvettes: Type I: 14,215 kg
Type II: 13,545 kg.

### Résultat de l'essai

- Mesure de la température sur la face non protégée des éprouvettes:
. Après 1 h d'exposition: Type I = 115°C
Type II = 150°C
. Après 1 h 30 d'exposition: Type I = 140°C
Type II = 200°C
- Mesure de l'augmentation de la flèche au centre des éprouvettes après 1 h 30 d'exposition au flux:
. Type I: 4 mm

. Type II: 9 mm
soit, à la fin de l'essai, une flèche totale de:
. 14 mm pour le type I
. 19 mm pour le type II.
La flèche critique annoncée pour ces éprouvettes est de 22 mm.

A titre de comparaison, ces caillebotis ont été essayés, dans les mêmes conditions:
- Sans protection thermique: effondrement après 6 minutes d'exposition
- Avec une protection thermique à base de laine de roche:
effondrement après 12 minutes d'exposition.
Les résultats ci-dessus amènent les conclusions suivantes:
L'écran selon l'invention, grâce à sa propriété de stabiliser la température aux environs de la température de vaporisation du liquide inclus dans l'hydrateur-surchauffeur (100°C dans le cas de l'eau) et par la durée de son efficacité, s'avère largement supérieur à tout autre revêtement isolant actuellement utilisé. De plus, de par sa structure et sa constitution, il permet, à volonté, une charge ou une recharge en liquide à vaporiser pour disposer toujours de la quantité nécessaire ou suffisante de ce dernier.

Au vu de ces résultats, les possibilités d'applications sont très importantes et étendues: domaine de l'aérospatiale, pétrochimie et d'une manière générale, tout secteur où le problème de la lutte contre l'incendie ou l'agression par des flux thermiques intenses se pose encore actuellement d'une manière cruciale.

Par ailleurs, des matériaux actuellement prohibés pour la réalisation, la construction ou la confection d'ensembles ou d'éléments d'ensembles lorsqu'il existe un risque d'incendie, pourraient être utilisés en combinaison avec une protection réalisée selon l'invention, comme par exemple l'utilisation des composites verre-résine sur les platesformes de forage en mer.

### Revendications

1. Ecran de dissipation thermique du type comprenant une face dite "face froide" destinée à venir au contact d'une paroi à protéger contre une agression thermique et une face dite "face chaude" appelée à être exposée à ladite agression thermique et, entre ces deux faces, des moyens appelés à jouer le rôle d'hydrateur et de surchauffeur, écran caractérisé en ce qu'il comprend:
- comme face froide, une couche d'un matériau polymère souple (2) armé ou non d'un matériau fibreux;
- comme moyen jouant le rôle d'hydrateur et de surchauffeur (3), un matériau souple du type nappe, mat, réseau de fibres réfractaires servant de support ou d'armature à un matériau inorganique pulvérulent susceptible d'absorber et de retenir un liquide pour donner une pâte ou un gel à haut rendement thixotrope, ce liquide ayant une température de vaporisation à la pression du milieu ambiant égale à celle correspondant à la température de protection désirée de l'élément à protéger;

- comme face chaude, une couche d'un matériau élastomère souple (4) armé ou non de matériau fibreux directement appliqué sur ledit moyen hydrateur surchauffeur, ce matériau élastomère devenant poreux aux températures supérieures à ladite température de vaporisation dudit liquide, cette face externe soumise à l'agression thermique constituant un moyen permettant, au cours de cette agression, audit liquide de se vaporiser à la pression du milieu ambiant.

2. Ecran de dissipation thermique selon la revendication 1, caractérisé en ce que ladite face externe renferme une charge capable de donner une réaction endothermique avec le liquide vaporisé et surchauffé provenant dudit moyen hydrateur surchauffeur au cours du déroulement de l'agression thermique.

3. Ecran de dissipation thermique selon la revendication 1, caractérisé en ce que ledit matériau destiné à absorber et à retenir le liquide pour donner une pâte ou un gel à haut rendement thixotrope est de la silice.

4. Ecran selon la revendication 2, caractérisé en ce que le carbone est le matériau donnant avec le liquide varporisé et surchauffé provant de l'hydrateur-surchauffeur, une réaction endothermique.

5. Ecran selon l'une quelconque des revendications 1 à 4, caractérisé en ce que le liquide est fourni à l'élément hydrateur-surchauffeur au cours d'une agression thermique.

**Patentansprüche**

1. Schirm zur Wärmeabführung der Bauart mit einer "kalte Fläche" genannten Fläche, die dazu bestimmt ist, mit einer Wand zum Schutz gegen einen Wärmeangriff in Berührung zu kommen, mit einer ""heiße Fläche" genannten Fläche, die dazu bestimmt ist, dem Wärmeangriff ausgesetzt zu sein, und zwischen den Flächen Mitteln, die dazu bestimmt sind, die Rolle eines Befeuchters und eines Überhitzers zu übernehmen, dadurch gekennzeichnet, daß er umfaßt:

- als kalte Fläche eine Schicht (2) aus einem weichen Polymer, das mit einem Fasermaterial verstärkt oder unverstärkt ist;
- als die Rolle des Befeuchters und des Überhitzers übernehmendes Mittel (3) ein weiches Material in der Art einer Watte, eines Vlieses, eines Netzes von Bruchfasern, das dazu dient, ein anorganisches pulverisiertes Material abzustützen oder zu verankern, das zum Absorbieren und zum Zurückhalten einer Flüssigkeit geeignet ist, um eine Paste oder ein Gel hoher Thixotropie zu ergeben, wobei die Flüssigkeit eine Verdampfungstemperatur bei dem Umgebungsdruck besitzt, die gleich der der erwünschten Schutztemperatur des zu schützenden Elementes entsprechenden ist; und

- als heiße Fläche eine Schicht (4) aus einem weichen Elastomermaterial, die mit Fasermaterial verstärkt oder unverstärkt ist, die direkt auf das Befeucht- und Überhitzungs-Mittel aufgebracht ist, wobei das elastomere Material bei Temperaturen über der genannten Verdampfungstemperatur der Flüssigkeit poros wird und die dem thermischen Angriff unterliegende Außenfläche ein Mittel bildet, das im Verlauf des Angriffes der Flüssigkeit Verdampfung bei dem Umgebungsdruck gestattet.

2. Schirm zur Wärmeabfuhr nach Anspruch 1, dadurch gekennzeichnet, daß die Außenfläche eine Füllung enthält, die fähig ist, eine endotherme Reaktion mit der verdampften und überhitzten Flüssigkeit zu ergeben, die während des Verlaufs des Wärmeangriffs aus dem Befeuchtungs- und Überhitzungsmittel entsteht.

3. Schild zur Wärmeabführung nach Anspruch 1, dadurch gekennzeichnet, daß das Material, das dazu bestimmt ist, die Flüssigkeit zu Absorbieren und Zurückzuhalten, um eine Paste oder ein hochthixotropes Gel zu ergeben, Kieselerde ist.

4. Schild nach Anspruch 2, dadurch gekennzeichnet, daß Kohlenstoff das Material ist, das mit der aus dem Befeuchter-Überhitzer hervorgehenden verdampften und überhitzten Flüssigkeit eine endotherme Reaktion ergibt.

5. Schild nach einem der Ansprüche 1 bis 4, dadurch gekennzeichnet, daß die Flüssigkeit dem Befeuchtungs/Überhitzungs-Element während eines thermischen Angriffs zugeführt wird.

**Claims**

1/ Heat dissipation screen of the type comprising a so called "cold" surface adapted to be placed in contact with a wall to be protected against heat and a so-called "hot" surface adapted to be exposed to said heat and, between said two surfaces, means adapted to serve as a hydrating and superheating agent, characterised in that it comprises:

- as its cold surface a layer of a flexible polymer material (2) optionally reinforced with a fibrous material;
- as the means (3) serving as hydrating and superheating agent a flexible non-woven type material, matting, network of refractory fibres serving as a support or armature for an inorganic material in powder form adapted to absorb and retain a liquid to form a paste or gel with strongly thixotropic properties, this liquid having a boiling point at the ambient pressure equal to the temperature at which the element to be protected is to be maintained;
- as its hot surface a layer of a flexible elastomer material (4) optionally reinforced with fibrous material applied directly to said hydrating and superheating means, this elastomer material becoming porous at temperatures above said boiling point of said liquid, this outside surface exposed to heat constituting means enabling said liquid to varpourise at the ambient pressure.

2/ Heat dissipation screen according to claim 3, characterised in that said outside surface incorporates a charge adapted to react endothermally with the vapourised and superheated liquid released from said hydrating and superheating means by said heat.

3/ Heat dissipation screen according to claim 1, characterised in that said material adapted to absorb and retain the liquid to form a paste or gel with strongly thixotropic properties is silica.

4/ Screen according to claim 2, characterised in that the material that reacts endothermally with the vapourised and superheated liquid from the hydrating and superheating agent is carbon.

5/ Screen according to any one of claims 1 to 4, characterised in that the liquid is supplied to the hydrating and superheating agent during exposure of the screen to said heat.